(19) Europäisches Patentamt European Patent Office Office européen des brevets

(11) **EP 4 542 838 A1**

(12) **EUROPEAN PATENT APPLICATION**

(43) Date of publication:
23.04.2025 Bulletin 2025/17

(21) Application number: 24207211.4

(22) Date of filing: 17.10.2024

(51) International Patent Classification (IPC):
$H02M\ 1/40^{(2007.01)}$     $H02M\ 5/12^{(2006.01)}$
$H02M\ 7/487^{(2007.01)}$

(52) Cooperative Patent Classification (CPC):
H02M 1/40; H02M 5/12; H02M 7/487; H02M 1/0025;
H02M 7/4833

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.10.2023 CN 202311359402

(71) Applicant: Huawei Digital Power Technologies
Co., Ltd.
Shenzhen, Guangdong 518043 (CN)

(72) Inventors:
• DONG, Mingxuan
Shenzhen, Guangdong (CN)
• CHEN, Jie
Shenzhen, Guangdong (CN)
• XIN, Kai
Shenzhen, Guangdong (CN)

(74) Representative: Maiwald GmbH
Engineering
Elisenhof
Elisenstrasse 3
80335 München (DE)

(54) **INVERTER WITH SECOND HARMONIC DETECTION FOR DYNAMIC VOLTAGE REDUCTION DURING GRID TRANSFORMER SATURATION**

(57) The present invention provides a power converter, a resisting method in inductive load switching, and a power generation system. The power converter includes a direct current input end, an alternating current output end, a bus capacitor, a DC/AC power conversion circuit, and a controller. The direct current input end is configured to connect to a direct current source. The alternating current output end is configured to connect to a load. The bus capacitor includes a positive bus capacitor and a negative bus capacitor that are connected in series. The positive bus capacitor is connected to a positive direct current bus. The negative bus capacitor is connected to a negative direct current bus. The DC/AC power conversion circuit is connected in parallel between the positive direct current bus and the negative direct current bus, and configured to convert a direct current from the direct current source into an alternating current, and transmit the alternating current to the load through the alternating current output end. The controller is configured to control, based on an even harmonic current on a connection line between the DC/AC power conversion circuit and the load, an output voltage at which the power converter outputs the alternating current, to reduce an absolute value of a voltage difference between the positive bus capacitor and the negative bus capacitor.

Description

## TECHNICAL FIELD

This application relates to the field of new energy power generation, and in particular, to a power converter, a resisting method in inductive load switching, and a power generation system.

## BACKGROUND

For a new energy power generation system, a power converter is configured to convert a direct current from a photovoltaic module or an energy storage battery into an alternating current and transmit the alternating current to a transformer. The transformer is configured to boost a voltage of the alternating current and further feed, to a medium- and high-voltage network, an alternating current obtained through voltage boosting. Similar to a transformer in a conventional power generation station, scheduled maintenance is also required for the transformer in the new energy system. After maintenance is performed, the transformer generates an inrush current with an excessively high amplitude when the transformer is switched under no-load conditions or a voltage is recovered. This causes a misoperation of a transformer relay protection apparatus or electrical damage to a device, such as the power converter, in the new energy system, which severely affects reliability of power supply of the new energy system. Therefore, in the industry, a harmonic compensation device is usually added, or the transformer is slowly switched to reduce current impact and voltage fluctuation generated during switching. However, adding the additional harmonic compensation device may increase system costs, and slow switching of the transformer may cause power loss of the entire new energy power generation system. Therefore, it is important to eliminate, without increasing hardware costs, impact of the inrush current when the transformer is switched.

## SUMMARY

Embodiments of this application provide a power converter, a resisting method in inductive load switching, and a power generation system. The power converter can avoid, without adding a hardware device, overcurrent protection and midpoint potential protection caused by inductive load switching, and ensure stable running of a new energy power generation system.

According to a first aspect, an embodiment of this application provides a power converter. The power converter includes a direct current input end, an alternating current output end, a bus capacitor, a DC/AC power conversion circuit, and a controller. The direct current input end is configured to connect to a direct current source. The alternating current output end is configured to connect to a load. The bus capacitor includes a positive bus capacitor and a negative bus capacitor that are connected in series. A series connection point of the positive bus capacitor and the negative bus capacitor is a midpoint. The positive bus capacitor is connected to a positive direct current bus. The negative bus capacitor is connected to a negative direct current bus. The DC/AC power conversion circuit is connected in parallel between the positive direct current bus and the negative direct current bus and configured to convert a direct current from the direct current source into an alternating current, and transmit the alternating current to the load through the alternating current output end. The controller is configured to control, based on an even harmonic current on a connection line between the DC/AC power conversion circuit and the load, an output voltage at which the power converter outputs the alternating current (hereinafter briefly referred to as the output voltage), to reduce an absolute value of a voltage difference between the positive bus capacitor and the negative bus capacitor. A frequency of the even harmonic current is an even multiple of a grid frequency.

In a possible implementation, the controller is configured to: when the even harmonic current on the connection line between the DC/AC power conversion circuit and the load increases, reduce the output voltage.

After an inductive load such as a transformer is switched, an excitation inrush current is generated on a connection line between the DC/AC power conversion circuit in the power converter and the inductive load. A large excitation inrush current may trigger overcurrent protection of the power converter. Besides, a large quantity of even harmonic currents in the excitation inrush current may cause a midpoint potential offset of the power converter, and further damage a switching transistor of the DC/AC power conversion circuit. Because there is a negative correlation between the even harmonic current and the output voltage at which the power converter outputs the alternating current, in this application, the output voltage is reduced, so that the inductive load such as the transformer quickly exits a magnetic saturation state, to reduce the excitation inrush current and ensure stable running of the power converter. In this setting way, switching of the inductive load such as the transformer at a full voltage can be implemented without adding hardware such as a midpoint balancing circuit or an external reactive power compensation device, to ensure stability of power supply to the load.

In a possible implementation, the controller is configured to: when a peak of a second harmonic current on the connection line between the DC/AC power conversion circuit and the load increases, reduce the output voltage. It should be noted that a large quantity of high-order harmonic currents exist in the excitation inrush current, and cause the excitation inrush current to be peaked in shape. Therefore, if a negative correlation between a peak of the excitation inrush current and the output voltage is blindly established, the output voltage is excessively reduced, which is not conducive to stability of power supply to the load. In addition, in the excitation inrush current, second harmonic current content is the largest, and the second harmonic current has greatest impact on a midpoint potential of the power converter. Therefore, the peak of the second harmonic current represents a magnitude of the excitation inrush current, so that the output voltage of the power converter can be controlled more precisely, and a capability of the power converter to resist impact of the excitation inrush current can be improved.

In a possible implementation, the controller is further configured to: when a peak change rate of the second harmonic current on the connection line between the DC/AC power conversion circuit and the load increases, reduce the output voltage at which the power converter outputs the alternating current. When the peak change rate of the second harmonic current increases, it indicates that the excitation inrush current also increases synchronously. Therefore, a negative correlation between the peak change rate of the second harmonic current and the output voltage is established, so that the output voltage can also be regulated more precisely, and the capability of the power converter to resist impact of the excitation inrush current can be improved.

In a possible implementation, the controller is configured to: when the absolute value of the voltage difference between the positive bus capacitor and the negative bus capacitor is greater than a specified threshold and the peak of the second harmonic current on the connection line between the DC/AC power conversion circuit and the load increases, reduce the output voltage at which the power converter outputs the alternating current. It should be noted that, in some phases, even if the excitation inrush current is large, the midpoint potential offset of the power converter is small. In this case, if the output voltage at which the power converter outputs the alternating current is reduced, stability of power supply to the load is affected. Therefore, before changing the output voltage at which the alternating current is output, the controller synchronously determines whether the absolute value of the voltage difference between the positive bus capacitor and the negative bus capacitor is greater than the specified threshold and whether the peak of the second harmonic current on the connection line between the DC/AC power conversion circuit and the load increases, so that the output characteristic of the power converter can be regulated more precisely, to ensure stability of power supply to the load.

In a possible implementation, the controller is configured to: when the absolute value of the voltage difference between the positive bus capacitor and the negative bus capacitor is greater than a specified threshold and the peak change rate of the second harmonic current on the connection line between the DC/AC power conversion circuit and the load increases, reduce the output voltage at which the power converter outputs the alternating current. Based on the same principle, before changing the output voltage at which the alternating current is output, the controller synchronously determines whether the absolute value of the voltage difference between the positive bus capacitor and the negative bus capacitor is greater than the specified threshold and whether the peak change rate of the second harmonic current on the connection line between the DC/AC power conversion circuit and the load increases, so that the output characteristic of the power converter can be regulated more precisely, to ensure stability of power supply to the load.

In a possible implementation, after the output voltage at which the power converter outputs the alternating current decreases, the controller is further configured to: when the absolute value of the voltage difference between the positive bus capacitor and the negative bus capacitor decreases, boost the output voltage at which the power converter outputs the alternating current. In addition, the controller is further configured to: after the output voltage at which the power converter outputs the alternating current decreases, when the absolute value of the voltage difference between the positive bus capacitor and the negative bus capacitor increases, reduce or maintain the output voltage at which the power converter outputs the alternating current. In this setting way, the controller can quickly respond to a possible excitation inrush current, to avoid impact of the excitation inrush current on the power converter. In addition, as described above, in some phases, even if the excitation inrush current is large, the midpoint potential offset of the power converter is small. Therefore, the output characteristic of the power converter can be regulated more precisely through further determining with reference to the absolute value of the voltage difference between the positive bus capacitor and the negative bus capacitor. Specifically, after the output voltage decreases, if it is detected that the absolute value of the voltage difference between the positive bus capacitor and the negative bus capacitor increases, it indicates that impact of the excitation inrush current is still large, and the output voltage needs to be continuously reduced or maintained, so that the inductive load exits a magnetic saturation region, to reduce the excitation inrush current. Similarly, after the output voltage decreases, if it is detected that the absolute value of the voltage difference between the positive bus capacitor and the negative bus capacitor decreases, it indicates that impact of the excitation inrush current gradually decreases. In this case, the output voltage at which the power converter outputs the alternating current may be gradually boosted, and gradually recovered to a level existing without impact of the excitation inrush current, to implement dynamic control of the output voltage and improve stability of power supply to the load.

According to a second aspect, this application provides a resisting control method in inductive load switching. The method includes: controlling, based on an even harmonic current on a connection line between the power converter and a load, an output voltage at which the power converter outputs an alternating current. The power converter is configured to convert a direct current from a photovoltaic module or an energy storage battery into the alternating current. A frequency of the even harmonic current is an even multiple of a grid frequency. In this setting way, switching of an inductive load such as a transformer at a full voltage can be implemented without adding hardware such as a midpoint balancing circuit or an external reactive power compensation device, to ensure stability of power supply to the load.

In a possible implementation, when the even harmonic current increases, the output voltage is reduced, to reduce an absolute value of a voltage difference between a positive bus capacitor and a negative bus capacitor. The positive bus capacitor is connected to the negative bus capacitor in series. The positive bus capacitor is connected to a positive direct current bus. The negative bus capacitor is connected to a negative direct current bus. In this setting way, switching of the inductive load such as the transformer at a full voltage can be implemented without adding hardware such as the midpoint balancing circuit or the external reactive power compensation device, to ensure stability of power supply to the load.

In a possible implementation, when a peak of the second harmonic current increases, the output voltage is reduced. In this setting way, the output voltage can be controlled more precisely, and a capability to resist impact of an excitation inrush current is improved.

In a possible implementation, when a peak change rate of the second harmonic current increases, the output voltage is reduced. In this setting way, the output voltage can be controlled more precisely, and the capability to resist impact of the excitation inrush current is improved.

In a possible implementation, when the absolute value of the voltage difference between a voltage of the positive bus capacitor and a voltage of the negative bus capacitor is greater than a specified threshold and the peak of the second harmonic current increases, the output voltage is reduced. In this setting way, an output characteristic of the power converter can be regulated more precisely, to ensure stability of power supply to the load.

In a possible implementation, when the absolute value of the voltage difference between a voltage of the positive bus capacitor and a voltage of the negative bus capacitor is greater than a specified threshold and the peak change rate of the second harmonic current increases, the output voltage is reduced. In this setting way, an output characteristic of the power converter can be regulated more precisely, to ensure stability of power supply to the load.

In a possible implementation, after the output voltage decreases, when the absolute value of the voltage difference between a voltage of the positive bus capacitor and a voltage of the negative bus capacitor decreases, the output voltage is boosted. Alternatively, after the output voltage decreases, when the absolute value of the voltage difference between a voltage of the positive bus capacitor and a voltage of the negative bus capacitor increases, the output voltage is reduced or maintained. In this setting way, a possible excitation inrush current may be responded to, to avoid impact of the excitation inrush current on the power converter. In addition, the output characteristic of the power converter can be regulated more precisely through further determining with reference to the absolute value of the voltage difference between the positive bus capacitor and the negative bus capacitor, to ensure stability of power supply to the load.

According to a third aspect, this application provides a method. The method includes: when an inductive load is switched, reducing an output voltage at which a power converter outputs an alternating current. The inductive load is connected to an alternating current output end of the power converter. A direct current input end of the power converter is configured to connect to a photovoltaic module or an energy storage battery. The power converter is configured to convert a direct current to an alternating current. In other words, when the inductive load is switched, the power converter directly reduces the output voltage at which the power converter outputs the alternating current, so that the inductive load quickly exits a magnetic saturation region, to reduce current impact of an excitation inrush current on the power converter, and ensure stability of power supply to the load.

According to a fourth aspect, this application provides a power generation system. The power generation system includes N power converters according to any one of the first aspect and an upper-level controller. Direct current input ends of the N power converters are configured to connect to a direct current source. Alternating current output ends of the N power converters are connected in parallel and configured to connect to a load. The upper-level controller is configured to: when midpoint potentials of at least two of the N power converters are offset, control speeds at which output voltages of the at least two power converters increase to be inversely proportional to a midpoint potential offset of a target power converter, with a largest midpoint potential offset, of the at least two target power converters. The midpoint potential offset is an absolute value of a voltage difference between a positive bus capacitor and a negative bus capacitor of each power converter. A series connection point of the positive bus capacitor and the negative bus capacitor is a midpoint. The positive bus capacitor is connected to a positive direct current bus. The negative bus capacitor is connected to a negative direct current bus. The upper-level controller is a power station-level controller or cloud controller.

Specifically, in the power generation system in which the alternating current output ends of the N power converters are connected in parallel, because each power converter has a different capability to resist impact of an excitation inrush current, after an inductive load connected to the N power converters is switched, an offset degree of a midpoint potential of each power converter is also different. Further, after each power converter reduces an output voltage, if each power converter gradually recovers the output voltage based only on a midpoint potential offset situation of the power converter, recovery speeds of output voltages of different power converters are different, and consequently, a large circulating current occurs in the power generation system. This severely affects security and stability of the power generation system. In this case, after the N power converters reduce output voltages, the upper-level controller obtains midpoint potential offset situations of the N power converters, and uses a power converter with a largest offset degree of a midpoint potential (which is most affected by the excitation inrush current and needs a long time to recover an output voltage) as the target power converter, to establish an inverse proportional relationship between the offset degree of a midpoint potential of the target power converter and the recovery speed of the output voltage. In this way, it can be ensured that N power converters have better consistency when facing the excitation inrush current, to avoid a large circulating current between the N power converters.

In this application, the power converter may be a power conversion system, a photovoltaic inverter, or an energy storage inverter in a smart photovoltaic system.

In conclusion, according to the power converter, the resisting method in inductive load switching, and the power generation system provided in this application, switching of the inductive load such as the transformer at the full voltage can be implemented without adding a hardware device, to avoid overcurrent and the midpoint potential offset of the power converter. In addition, the output characteristic can be dynamically and flexibly changed based on the magnitude of the excitation inrush current, to ensure stability of power supply to the load.

**BRIEF DESCRIPTION OF DRAWINGS**

FIG. 1 is a schematic of networking of a new energy power generation system;
FIG. 2 is a schematic of two architectures of an energy storage system;
FIG. 3 is a topology schematic of a new energy power generation system based on a VSG control strategy according to this application;
FIG. 4 is a schematic of a resisting control principle in inductive load switching according to this application;
FIG. 5 is a schematic of a control principle for combining resistance to inductive load switching and a VSG control strategy according to this application;
FIG. 6 is a diagram of a resisting method in inductive load switching according to this application; and
FIG. 7 is a diagram of a resisting method in inductive load switching according to this application.

**DESCRIPTION OF EMBODIMENTS**

Technical solutions of this application are further described below in detail with reference to the accompanying drawings.

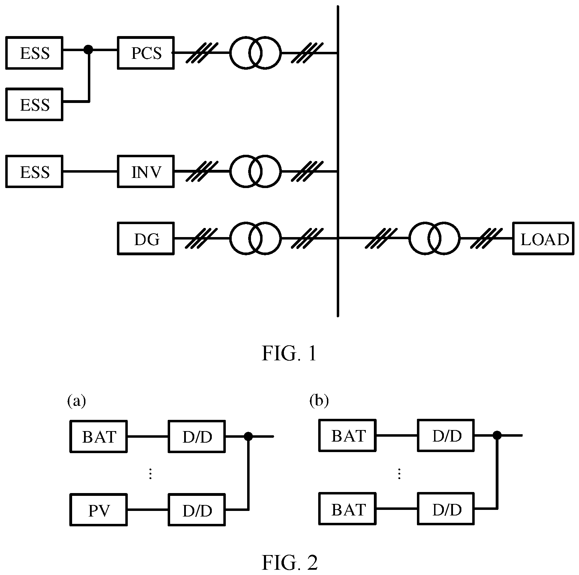

FIG. 1 is a schematic of networking of a common new energy power generation system. The system includes an energy storage system (ESS), a power conversion device, a grid-connection switch, a transformer, a power station controller (not shown), and the like. Specifically, the ESS includes direct current sources such as a photovoltaic (PV) module and an energy storage battery, and a direct current/direct current (DC/DC) power converter. The power conversion device includes a power conversion system (PCS) or a photovoltaic inverter (INV). The energy storage battery is configured to store electric energy, and transmit the electric energy to a PCS in a form of direct current. The photovoltaic module is configured to convert light energy into electric energy, and transmit the electric energy to a photovoltaic inverter in a form of direct current. The DC/DC power converter is located between the direct current source and the power conversion device, and is configured to perform voltage conversion on a direct current output by the direct current source. Further, a direct current input end of the power conversion device is connected to the ESS. An alternating current output end is connected to the transformer, and is configured to perform direct current/alternating current (DC/AC) conversion on a direct current from the ESS, and output an alternating current obtained through power conversion to the transformer. The PCS may be further configured to perform alternating current/direct current (AC/DC) conversion on an alternating current from a grid, and transfer a direct current obtained through power conversion to the energy storage battery to charge the energy storage battery. Further, the transformer is configured to perform voltage boost conversion on an alternating current from the power conversion device, and output, to the grid, an alternating current obtained through voltage boosting. During actual application, the new energy power generation system may further be equipped with a distributed generation (DG) device as required, such as a diesel generator. The networking of the new energy power generation system may cover application scenarios such as a large-sized energy storage power station, small- and medium-sized distributed energy storage, and residential energy storage, which are not listed one by one herein.

Proceed to refer to FIG. 2. FIG. 2(a) is a schematic of an architecture of an ESS in a photovoltaic-energy storage direct current coupling scenario, and FIG. 2(b) is a schematic of an architecture of an ESS in an energy storage direct current coupling scenario. Specifically, in FIG. 2(a), a direct current output end of an energy storage battery is correspondingly connected to one DC/DC power converter to form a direct current branch, and a direct current output end of a photovoltaic cell panel is correspondingly connected to another DC/DC power converter to form another direct current branch. Direct current output ends of DC/DC power converters in the two or more direct current branches are connected in parallel, to transmit electric energy of the ESS to a PCS or a photovoltaic inverter. FIG. 2(b) is different from FIG. 2(a) in that the photovoltaic cell panel is removed. In other words, all direct current sources are energy storage batteries. Except this difference, a connection relationship between devices in the ESS is the same as that in FIG. 2(a), and details are not described herein again.

In a micro-grid system or an isolated-grid system, a plurality of new energy power generation stations form a local grid. Different power generation stations separately transmit, to a medium- and high-voltage grid through several main transformers, an alternating current obtained through voltage boosting, to implement grid-connected power generation. Similar to a main transformer in a conventional power system, scheduled maintenance is required for a main transformer on a high-voltage side of each power generation station. However, after maintenance is performed, switching of the main transformer usually causes transient current impact and voltage fluctuation in a new energy power generation system. This severely affects security and stability of the ESS. Specifically, during switching, the main transformer on the high-voltage side usually generates a large excitation inrush current and a large sympathetic inrush current. The excitation inrush current is a transient-state current generated in a transformer winding when the transformer is switched on for connecting to a grid without connecting to a load. When a remaining magnetic flux that is in an iron core and that exists before the transformer is connected to the grid is in a same direction as a magnetic flux generated by an operating voltage when the transformer is connected to the grid, a total magnetic flux inside the transformer far exceeds a saturated magnetic flux of the iron core. As a result, the iron core is saturated instantaneously and generates an excessively large impulse current (a peak may be 6 to 8 times a rated current of the transformer). The impulse current is the excitation inrush current. Further, the sympathetic inrush current usually occurs in a power generation system in which a plurality of transformers are cascaded. When one transformer is switched at a full voltage, a transformer that runs in series or parallel with the transformer also generates a sympathetic inrush current that is in an opposite direction to an excitation inrush current generated by the switched-on transformer and whose peak appears alternately with a peak of the excitation inrush current. After the sympathetic inrush current occurs, decay rates of inrush currents in two or more transformers are much slower than that existing when a single transformer is switched on. On this basis, because a power conversion device in the new energy power generation system has a far weaker capability to resist current impact than the conventional power generation station, occurrence of the excitation inrush current and the sympathetic inrush current usually causes overcurrent protection of the power conversion device, and consequently causes power loss of the entire new energy power generation station. In addition, the excitation inrush current and the sympathetic inrush current usually include large even harmonic currents, and this easily causes a midpoint potential offset of a three-level or multi-level power conversion device. Consequently, stress on switching transistors in the power conversion device is inconsistent, and a life of the switching transistor is greatly shortened.

It should be noted that in the new energy power generation system, in addition to a transformer, another inductive load (for example, a motor) may also generate a specific even harmonic current in a switching process, and cause a midpoint potential offset of a three-level or multi-level power conversion device, which is not described herein one by one.

Based on adverse impact of the inductive load during switching, in this application, without adding a hardware device, an output characteristic of the power conversion device is changed, so that switching, at a full voltage, of the inductive load represented by a transformer is implemented, and impact of the excitation inrush current is basically eliminated, to ensure reliability of power supply to the load. The following uses a PCS as an example to describe the technical solutions provided in this application with reference to specific principles and accompanying drawings.

To better understand the technical solutions provided in this application, the following specifically uses a transformer as an example to describe a generation principle, of an excitation inrush current, existing when the transformer is switched.

When the transformer is switched, if a phase angle of a voltage is $\theta$, a primary-side voltage of the transformer is:

$$u = U_m \sin(wt + \theta) \qquad (1\text{-}1)$$

For a primary-side winding of the transformer (a change of L is not considered currently), the following is available:

$$u = \frac{d\varphi}{dt} + \frac{R}{L}\varphi \qquad (1\text{-}2)$$

R is a resistance of the primary-side winding of the transformer, L is an inductance of the primary-side winding of the transformer, and $\varphi$ is a magnetic flux of a transformer winding.

Formula (1-1) and Formula (1-2) are combined to obtain:

$$U_m \sin(wt + \theta) = \frac{d\varphi}{dt} + \frac{R}{L}\varphi \quad (1\text{-}3)$$

The following may be obtained through solving:

$$\varphi = e^{\int -\frac{R}{L}t} \cdot \left(C + \int U_m \sin(\omega t + \theta) e^{\int \frac{R}{L}tdt}\right) \quad (1\text{-}4)$$

$$\varphi = Ce^{-\frac{R}{L}t} + \varphi_m \sin(\omega t + \theta - \gamma) \quad (1\text{-}5)$$

Herein,

$$\varphi_m = \frac{1}{\sqrt{\omega^2 + \left(\frac{R}{L}\right)^2}} U_m \quad (1\text{-}6)$$

$$C = (\varphi_r - \varphi_m \sin(\theta - \gamma)) \quad (1\text{-}7)$$

$$\gamma = \mathrm{atan}\, \frac{\omega L}{R} \quad (1\text{-}8)$$

$\varphi_r$ is magnetic remanance of a magnetic core of the transformer.

The transformer winding $wL \gg R$. Therefore,

$$\varphi = (\varphi_r + \varphi_m \cos(\theta))e^{-\frac{R}{L}t} - \varphi_m \cos(\omega t + \theta) \quad (1\text{-}9)$$

Herein,

$$\varphi_m = \frac{U_m}{\omega} \quad (1\text{-}10)$$

Finally,

$$\varphi = -\varphi_m \cos(\omega t + \theta) + (\varphi_r + \varphi_m \cos\theta)e^{-\frac{R_1}{L_1}t} = \varphi_s + \varphi_p \quad (1\text{-}11)$$

$\varphi_s$ is a steady-state magnetic flux component of the winding, and $\varphi_p$ is a transient-state magnetic flux component of the winding. It can be learned from Formula (1-11) that the steady-state magnetic flux component $\varphi_s$ of the winding changes periodically based on a frequency same as a fundamental frequency (Fourier decomposition is performed on an alternating current output by the PCS, and a wave that is obtained through decomposition and that has a lowest frequency is the fundamental wave. In grid standards of different countries, fundamental frequencies may be different. For example, in China, the fundamental wave is an alternating current, with a frequency of 50 Hz, output by the PCS. Usually, a fundamental voltage is an output voltage at which the PCS outputs the alternating current). The transient-state magnetic flux component $\varphi_p$ of the winding gradually approaches zero as time goes by, and finally only the steady-state component is left. In other words, after the transformer is switched on without connecting to a load, the magnetic flux in the transformer needs to undergo a transition process to reach a steady state. Based on the foregoing reasoning, it can be learned that at a moment when the transformer is switched on without connecting to a load, the transient-state magnetic flux component $\varphi_p$ of the winding is the largest, and the transient-state magnetic flux component $\varphi_p$ of the winding is in direct proportion to an amplitude $U_m$ of a fundamental voltage $V_N$. In other words, the amplitude $U_m$ of the fundamental voltage $V_N$ is reduced to reduce the transient-state magnetic flux component $\varphi_p$ of the winding. Further, with reference to the foregoing generation principle of the excitation inrush current, it can be learned that the excitation inrush current occurs only after the magnetic flux of the transformer enters a saturation region. Therefore, the fundamental voltage $V_N$ is reduced to reduce the magnetic flux of the transformer, to reduce the excitation inrush current, and finally mitigate an offset degree of a midpoint potential of the PCS. Inspired by this, a negative proportional relationship between the fundamental voltage $V_N$ and the excitation inrush current is established to mitigate impact of the excitation inrush current on the midpoint potential of the PCS. However, it should be noted that a waveform of the excitation inrush current is usually peaked in shape, which indicates that there are a large quantity of aperiodic components and high-order harmonics (mainly second and third harmonics) in the excitation inrush current. Therefore, if the fundamental voltage $V_N$ is simply controlled to decrease as a current peak corresponding to the excitation inrush current increases, the fundamental voltage $V_N$ may excessively decrease, which is not conducive to stability of a new energy power generation system. Based on this, a key to solving a midpoint potential offset, of the PCS, caused by switching of an inductive load such as a transformer at a full voltage is to select appropriate parameters representing severity of the excitation inrush current and establish a negative proportional relationship between these parameters and the fundamental voltage $V_N$.

Therefore, in this application, related parameters of an even harmonic are selected to represent severity of the excitation inrush current. A reason is that, in the high-order harmonics of the excitation inrush current, a proportion of even harmonic currents (harmonics whose frequencies are an even multiple of the fundamental frequency) is the largest, and therefore, the even harmonic current has greatest impact on the midpoint potential of the PCS. In the following, a second harmonic current is specifically used as an example in this application, and a negative proportional relationship between a peak/peak change rate of the second harmonic current and a fundamental voltage $V_N$ is separately established, to dynamically adjust an output characteristic of a PCS, and ensure stability of power supply to a load.

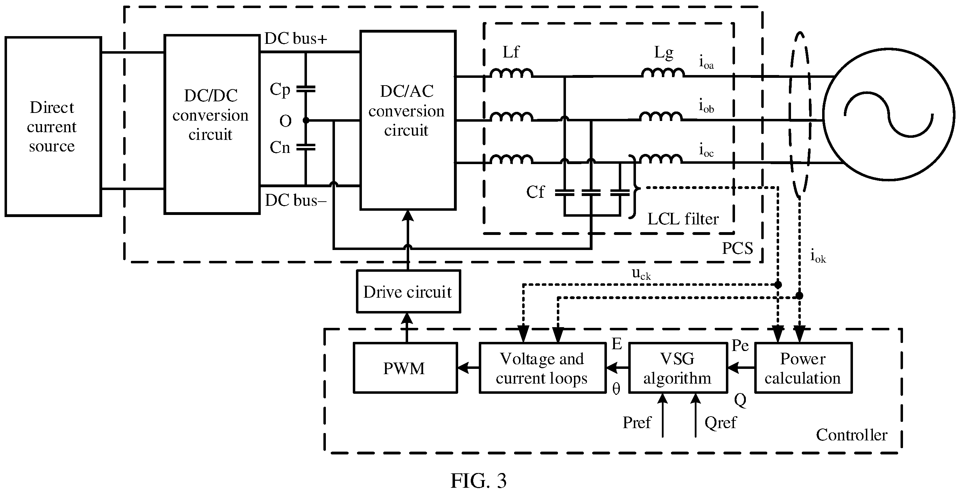

First, refer to FIG. 3. FIG. 3 is a topology schematic of a new energy power generation system based on a VSG control strategy according to this application. A PCS includes a direct current input end, an alternating current output end, a DC/DC power conversion circuit, a bus capacitor, a DC/AC power conversion circuit, an LCL filter, a controller, a drive circuit, a sampling circuit (not shown), and the like. Specifically, the direct current input end is configured to connect to a direct current source such as a photovoltaic module and/or an energy storage battery. The alternating current output end is configured to connect to a load. The bus capacitor includes a positive bus capacitor $C_p$ and a negative bus capacitor $C_n$ that are connected in series. A series connection point of the positive bus capacitor $C_p$ and a negative bus capacitor $C_n$ is a midpoint. The positive bus capacitor $C_p$ is connected to a positive direct current bus. The negative bus capacitor $C_n$ is connected to a negative direct current bus. The DC/DC power conversion circuit may be integrated inside the PCS, or may be an independent device. The DC/DC power conversion circuit is configured to perform voltage conversion on a direct current output by the direct current source. Further, the DC/AC power conversion circuit is configured to convert the direct current from the direct current source into an alternating current. The LCL filter is configured to perform high-frequency filtering processing on the alternating current output by the DC/AC power conversion circuit, so that the PCS outputs a standard sine wave. On this basis, to implement switching of an inductive load such as a transformer at a full voltage, in the PCS provided in this application, the sampling circuit is configured to detect in real time a peak/peak change rate of a second harmonic current between the DC/AC power conversion circuit and the alternating current output end of the PCS, and send the peak/peak change rate of the second harmonic current to the controller. Further, the controller controls the drive circuit to drive a switching transistor in the DC/AC power conversion circuit to be turned on and turned off, to change an amplitude of a fundamental voltage $V_N$ output by the PCS. Optionally, the sampling circuit may not be disposed in the PCS. Instead, a sampling circuit is disposed on a load side. Specifically, the sampling circuit on the load side is configured to monitor in real time a peak/peak change rate of a second harmonic current that flows through the load, and transmit the peak/peak change rate of the second harmonic current to the controller of the PCS by using a communication means. The controller of the PCS controls the drive circuit to drive the switching transistor in the DC/AC power conversion circuit to be turned on and turned off, to change the amplitude of the fundamental voltage $V_N$ output by the PCS. In other words, when the inductive load is switched, the second harmonic current exists on a connection line between the DC/AC power conversion circuit of the PCS and the load. Therefore, the controller of the PCS may obtain the peak/peak change rate of the second harmonic current by using the sampling circuit of the PCS, or may obtain the peak/peak change rate of the second harmonic current on the load side by using a communication means. This is not limited in this application. In addition, it should be noted that, during actual application, for a grid-forming PCS, the controller may adjust, based on an original virtual synchronous generator (Virtual Synchronous Generator, VSG) control algorithm, the amplitude of the fundamental voltage $V_N$ output by the PCS. A specific VSG control principle is described below.

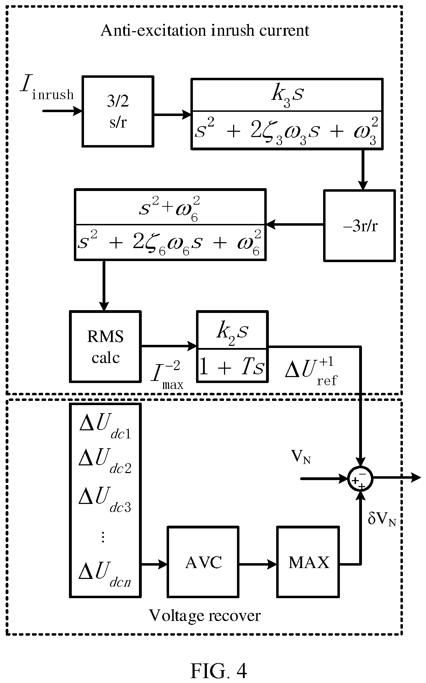

Proceed to refer to FIG. 4 in the following. FIG. 4 is a schematic of a resisting control principle in inductive load switching by a PCS according to this application. As shown in FIG. 4, in an anti-excitation inrush current phase, a controller first transforms an excitation inrush current from coordinates in a three-phase static coordinate system to coordinates in a fundamental positive-sequence two-phase rotating coordinate system through rotation coordinate transformation, and then extracts a triple-frequency signal by using a triple-frequency band-pass filter. In the positive-sequence two-phase rotating coordinate system, both a positive-sequence secondary current and a negative-sequence quadratic current are represented as triple-frequency signals. The triple-frequency signal in the fundamental positive-sequence two-phase rotating coordinate system is transformed to coordinates in a negative sequence secondary two-phase rotating coordinate system. Then, a direct current quantity in the triple-frequency signal in the negative sequence secondary two-phase rotating coordinate system is extracted by using a sextuple-frequency band-pass filter, and the direct current quantity represents a peak of a negative-sequence second harmonic current, that is, $I_{max}^{-2}$ . Further, differential calculation is performed on the peak of the negative-sequence second harmonic current, so that a peak change rate of the negative-sequence second harmonic current may be obtained. Finally, a negative proportional relationship between the peak of the second harmonic current or the peak change rate of the second harmonic current and an amplitude of a fundamental positive-sequence voltage is established, that is,

$$\Delta U_{\text{ref}}^{+1} = -I_{\text{max}}^{-2} k_2 \qquad (1\text{-}12)$$

$$\Delta U_{\text{ref}}^{+1} = -I_{\text{max}}^{-2} \frac{k_2 s}{1+Ts} \quad (1\text{-}13)$$

$\frac{s}{1+Ts}$ represents a differential process, Ts is an inertia time constant, and $k_2$ is a negative proportional coefficient.

In Formula (1-12), a larger peak of the negative-sequence second harmonic current indicates a larger decreased amplitude of the fundamental positive-sequence voltage, that is, indicates a smaller amplitude of the fundamental positive-sequence voltage. A smaller amplitude of the fundamental positive-sequence voltage indicates a smaller magnetic flux of a transformer winding, and therefore the excitation inrush current also decreases. Based on the same principle, in Formula (1-13), a larger peak change rate of the negative-sequence second harmonic current indicates a larger decreased amplitude of the fundamental positive-sequence voltage. Therefore, when the peak change rate of the negative-sequence second harmonic current increases, the amplitude of the fundamental positive-sequence voltage is reduced, so that a magnitude of the excitation inrush current can also be gradually reduced. It should be noted that, during actual application, only a negative correlation needs to be ensured between the peak/peak change rate of the second harmonic current and a fundamental voltage $V_N$. In other words, the negative proportional coefficient $k_2$ may be a change value. This is not limited in this application.

It can be learned from the foregoing two mathematical models that, in this application, the negative proportional relationship between the peak/peak change rate of the second harmonic current and the amplitude of the fundamental positive-sequence voltage is established, so that the PCS can actively and adaptively adjust the fundamental positive-sequence voltage based on a specific situation of the excitation inrush current, to mitigate a midpoint potential offset, of the PCS, caused by the excitation inrush current. Specifically, in the anti-excitation inrush current phase shown in FIG. 4:

3/2 indicates that coordinates in a three-phase coordinate system are transformed to coordinates in a two-phase coordinate system;

s/r indicates that coordinates in a static coordinate system are transformed to coordinates in a rotating coordinate system;

$\frac{k_3 s}{s^2 + 2\zeta_3 \omega_3 s + \omega_3^2}$ represents the triple-frequency band-pass filter, where $k_3$ represents a proportional coefficient of the filter, $\zeta_3$ represents a damping ratio, $\omega_3$ represents a triple frequency, and s represents a frequency domain;

-3r/r indicates that the rotating coordinate system rotates counterclockwise by 3 times a fundamental phase to obtain new coordinate transformation; and

$\frac{s^2 + \omega_6^2}{s^2 + 2\zeta_6 \omega_6 s + \omega_6^2}$ represents the sextuple-frequency band-pass filter, where $\zeta_6$ represents a damping ratio, $\omega_6$ represents a sextuple frequency, and s represents a frequency domain.

It should be noted that, during actual application, another manner may alternatively be used to extract the peak/peak change rate of the second harmonic current in the excitation inrush current, which is not listed one by one herein. In addition, in addition to the foregoing two parameters, a negative proportional relationship between a peak/peak change rate of another even harmonic current (for example, a fourth harmonic current or a sixth harmonic current) and the fundamental voltage $V_N$ may be established. This is not limited in this application.

Further, proceed to refer to a voltage recovery phase in FIG. 4. In this phase, whether to change the fundamental voltage $V_N$ and a change degree of the fundamental voltage $V_N$ are further determined with reference to a parameter, namely, an absolute value (that is, the midpoint potential offset of the PCS) of a voltage difference between a positive bus capacitor and a negative bus capacitor in the PCS. As described above, the peak/peak change rate of the second harmonic current is positively correlated with the magnitude of the excitation inrush current. However, in some phases, even if the peak/peak change rate of the second harmonic current is large, the midpoint potential offset of the PCS is small. In this case, if the fundamental voltage $V_N$ is blindly reduced, the fundamental voltage $V_N$ may excessively decrease, which is not conducive to stability of a power generation system. Therefore, whether to change the fundamental voltage $V_N$ and the change degree of the fundamental voltage $V_N$ are further determined with reference to the parameter, namely, the midpoint potential offset of the PCS, so that an output characteristic of the PCS can be better adaptively adjusted, to improve precision of adjusting a midpoint potential of the PCS.

However, it should be noted that the parameter, namely, the midpoint potential offset of the PCS, may further have two explanations during actual application. One of the explanations is a midpoint potential offset "at any moment", that is, $\Delta U_{dcn}$ ($n \geq 1$), and the other one of the explanations is an average midpoint potential offset "at a specific time period". It is more accurate to represent the parameter, namely, the midpoint potential offset of the PCS, by using the average midpoint potential offset "at a specific time period". A reason is that, when some triple-frequency currents flow through a midpoint of a bus capacitor, a midpoint potential may have periodic positive offset and negative offset. However, the periodic offset does not affect midpoint potential balance. In other words, even if the midpoint potential has an offset at a moment, the midpoint potential does not have a direct current offset in a time period, and the midpoint potential remains in a balanced state. Based on this, in this application, the parameter, namely, the absolute value of the voltage difference between the positive bus capacitor and the negative bus capacitor in the PCS, is the direct current offset of the midpoint potential. Specifically, average filtering processing may be performed on an instantaneous midpoint potential offset within a specified time period, which is an AVC phase shown in FIG. 4, to ensure that a midpoint potential offset within the specified time period is a direct current offset.

For example, in a residential scenario, the controller of the PCS obtains in real time a peak/peak change rate of a second harmonic current on a connection line between a DC/AC power conversion circuit and a load. At the same time, the controller of the PCS further obtains in real time the absolute value of the voltage difference between the positive bus capacitor and the negative bus capacitor in the PCS. On this basis, when the load connected to the PCS is switched in a full voltage and generates an excitation inrush current, the controller of the PCS establishes a negative proportional relationship between the fundamental voltage $V_N$ and the peak/peak change rate of the second harmonic current through the foregoing anti-excitation inrush current phase, and in addition, obtains the absolute value of the voltage difference between the positive bus capacitor and the negative bus capacitor in the PCS, to adaptively adjust a proportional coefficient $k_2$ of the negative proportional relationship based on the midpoint potential offset of the PCS, and implement more precise control. Certainly, during actual application, because impact of the excitation inrush current is instantaneous, to quickly respond to the excitation inrush current, a sequence relationship may also be established for the foregoing control procedure. For example, when the peak/peak change rate of the second harmonic current on the connection line between the DC/AC power conversion circuit and the load increases, the controller first reduces the fundamental voltage $V_N$, to implement quick response to the excitation inrush current. Further, the controller obtains the midpoint potential offset of the PCS. If the midpoint potential offset of the PCS is small, it indicates that the excitation inrush current has small impact on the midpoint potential, and the controller increases a recovery speed $\delta V_N$ of the fundamental voltage $V_N$. If the midpoint potential offset of the PCS is large, it indicates that the excitation inrush current has large impact on the midpoint potential, and the controller continues to reduce the fundamental voltage $V_N$ or reduce the recovery speed $\delta V_N$ of the fundamental voltage $V_N$, to maintain midpoint potential balance of the PCS. It can be learned that the recovery speed $\delta V_N$ of the fundamental voltage $V_N$ is inversely proportional to the midpoint potential offset of the PCS. In this setting way, quick response of the PCS to the excitation inrush current is ensured, and excessive reduction in the fundamental voltage $V_N$ is avoided, to improve stability of power supply to the load.

For example, in a usage scenario of a large-sized ground power station or an industrial and commercial power station, alternating current output ends of a plurality of PCSs are connected in parallel and further connected to a same transformer. In a switching process of the transformer, an excitation inrush current generated by the transformer has impact on all the PCSs connected to the transformer. In a scenario in which alternating current output ends of n ($n \geq 2$) PCSs are connected in parallel, an excitation inrush current generated when a transformer connected to the n PCSs is switched causes midpoint potentials of the n PCSs to have instantaneous offsets of $\Delta U_{dc1}$, ..., and $\Delta U_{dcn}$. In this case, after an average filtering AVC phase similar to that of the foregoing residential scenario, a controller of each PCS obtains an absolute value of a voltage difference between a positive bus capacitor and a negative bus capacitor of the PCS, that is, a direct current offset of a midpoint potential, and reports the data to an upper-level controller such as a power station-level controller or a cloud controller. Further, the upper-level controller compares direct current offsets of midpoint potentials of the n PCSs, selects a maximum value among the direct current offsets, and finally determines a recovery speed $\delta V_N$ of a fundamental voltage $V_N$ of the n PCSs based on the maximum value. In this setting way, it can be ensured that the n PCSs have better consistency when facing the excitation inrush current, to avoid a large circulating current between the n PCS, and improve stability of a new energy power generation system. Based on the same principle, after the transformer is switched, the n PCSs each establish, based on a condition of the PCS, a negative proportional relationship between a peak/peak change rate of a second harmonic current and the fundamental voltage $V_N$. The upper-level controller may obtain a maximum direct current offset of a midpoint potential in the n PCSs at the same time, and determine whether to reduce the fundamental voltage $V_N$ and a reduction degree of the fundamental voltage $V_N$ based on the maximum direct current offset of the midpoint potential. In addition, the upper-level controller may further determine the recovery speed $\delta V_N$ of the fundamental voltage $V_N$ of the n PCSs based on the maximum direct current offset of the midpoint potential in the n PCSs after the fundamental voltage $V_N$ decreases. Details are not described herein again.

A grid-forming PCS can actively provide voltage support and frequency support for a grid when a grid voltage or grid frequency fluctuates, to ensure stability of the new energy power generation system. It is excessively important for the PCS to have a grid-forming capability, especially in a power system in which a penetration rate of a new energy power generation device gradually increases, a system inertia gradually decreases, and a system strength gradually decreases. To simulate a frequency modulation characteristic of a synchronous generator, the grid-forming PCS uses, in VSG control, a governor that simulates a conventional synchronous generator. The governor has a droop characteristic (P-$\omega$ droop characteristic) between an active power and a frequency, and a relationship is shown as Formula (1-14):

$$P_m = P_{ref} + k_p(\omega_0 - \omega) \qquad (1\text{-}14)$$

$P_m$ is a mechanical power of the synchronous generator, $P_{ref}$ is a reference active power, and $k_p$ is an active power-frequency droop coefficient. It can be learned from Formula (1-14) that, when the grid frequency decreases, the mechanical power of the synchronous generator needs to be increased; and when a grid frequency increases, the mechanical power of the synchronous generator needs to be reduced, to provide frequency support for the grid.

Further, to improve stability of an output frequency of the PCS, a rotor swing equation needs to be added to VSG control to simulate a moment of inertia and a damping winding of the conventional synchronous generator. The rotor swing equation is shown as Formula (1-15):

$$J\frac{d\omega}{dt} = T_m - T_e - T_d = \frac{P_m}{\omega_0} - \frac{P_e}{\omega_0} - D(\omega - \omega_g) \qquad (1\text{-}15)$$

J is the moment of inertia. $T_m$, $T_e$, and $T_d$ are respectively a mechanical torque, an electromagnetic torque, and a damping torque of the synchronous generator. D is a damping coefficient. $P_e$ is an electromagnetic power of the synchronous generator. $\omega$ is a reference angular velocity of VSG control. $\omega_g$ is a synchronous angular velocity of the grid. Usually, $\omega_g$ may be replaced by a reference angular velocity $\omega_0$ of the grid. Formula (1-15) is substituted into Formula (1-14), so that $\omega_g = \omega_0$, and $\Delta\omega = \omega - \omega_0$, to obtain Formula (1-16):

$$\frac{P_{ref} - k_p(\omega_0 - \omega) - P_e}{\omega_0} - D(\omega_0 - \omega) = Js\Delta\omega \quad (1\text{-}16)$$

$k_p$ is equivalent to an adjustment proportion of the governor of the synchronous generator, and represents a change amount of the mechanical torque caused by a specific frequency offset. D is the damping coefficient of the system, and may ensure that a frequency of a VSG changes within a specific range in an adjustment process. J is an inertia time constant, and represents that the VSG has a virtual mechanical inertia, to control a magnitude of an inertia in the entire adjustment process.

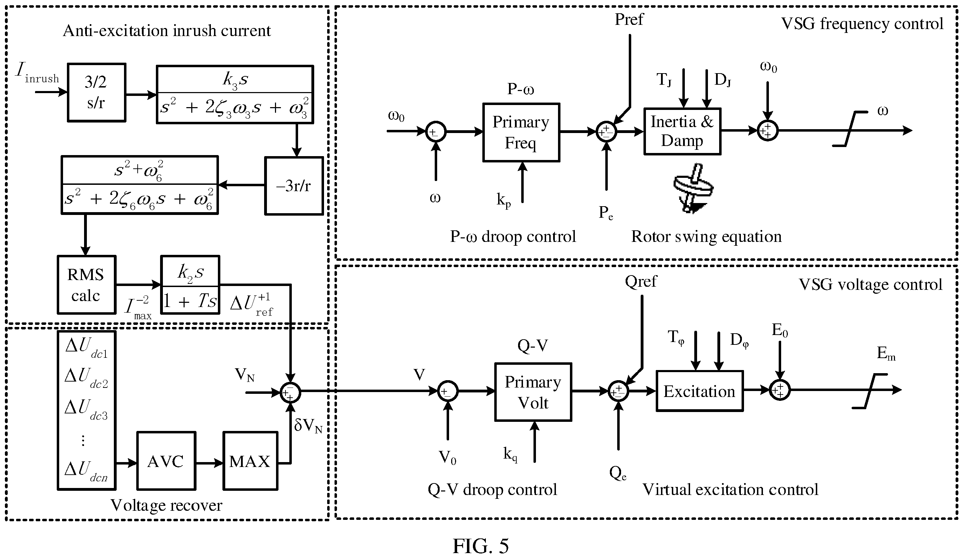

Proceed to refer to FIG. 5. FIG. 5 is a schematic of a control principle for combining resistance to inductive load switching and a VSG control strategy. As shown in FIG. 5, a frequency control phase of a VSG sequentially undergoes P-$\omega$ droop control and a rotor swing equation. The P-$\omega$ droop control complies with a mathematical relationship shown in Formula (1-14), and the rotor swing equation complies with a mathematical relationship shown in Formula (1-15). The P-$\omega$ droop control and the rotor swing equation are combined, so that a PCS can obtain a droop characteristic of a conventional synchronous generator, and also obtain an inertia and damping, to buffer frequency fluctuation of a grid, and reduce frequency fluctuation during switching between grid connection and grid disconnection.

Further, the conventional synchronous generator adjusts excitation to change a reactive power and a motor-end voltage. Similarly, a grid-forming PCS simulates, in VSG control, a stator equation of the conventional synchronous generator to generate induced electromotive force. To ensure that an output voltage is steady, VSG control needs to meet a droop characteristic between the reactive power and the voltage, that is, a Q-V droop characteristic. A relationship is shown as Formula (1-17):

$$E = E_0 + k_q(Q_{ref} - Q_e) \qquad (1\text{-}17)$$

$Q_{ref}$ is a reference reactive power. $E_0$ is a no-load electric potential. $k_q$ is a reactive power-voltage droop coefficient.

Still refer to FIG. 5. As shown in FIG. 5, a voltage control phase of the VSG sequentially undergoes Q-V droop control and virtual excitation control. The Q-V droop control complies with a mathematical relationship shown in Formula (1-17). The Q-V droop control is different from conventional droop control in that the VSG gradually approaches a steady-state operating point with continuous voltage regulation, avoids system oscillation caused by frequent voltage regulation when the reactive power changes frequently, and exhibits great dynamic performance. In this application, after an anti-excitation inrush current phase and a voltage recovery phase, a fundamental voltage $V_N$ output by the PCS may be used as a voltage V at a current moment in the VSG voltage control phase, to reuse an original VSG control strategy of the PCS.

It should be noted that, in this application, the foregoing control logic is described only by using the PCS as an example. During actual application, the foregoing control logic may be further applied to a power conversion device such as a photovoltaic inverter. This is not limited in this application. In addition, the foregoing control logic may be carried in a controller of a single PCS, or may be partially or completely carried in an upper-level controller such as a power station-level controller or a cloud controller. In other words, the foregoing control logic may be applied in a residential scenario, or may be applied in a scenario such as a large-sized ground power station or an industrial and commercial power station.

Further, this application further provides a resisting method in inductive load switching. According to the method, after the inductive load is switched, a midpoint potential offset of a three-level or multi-level power converter can be effectively reduced, and a capability of a power converter to resist current impact is improved.

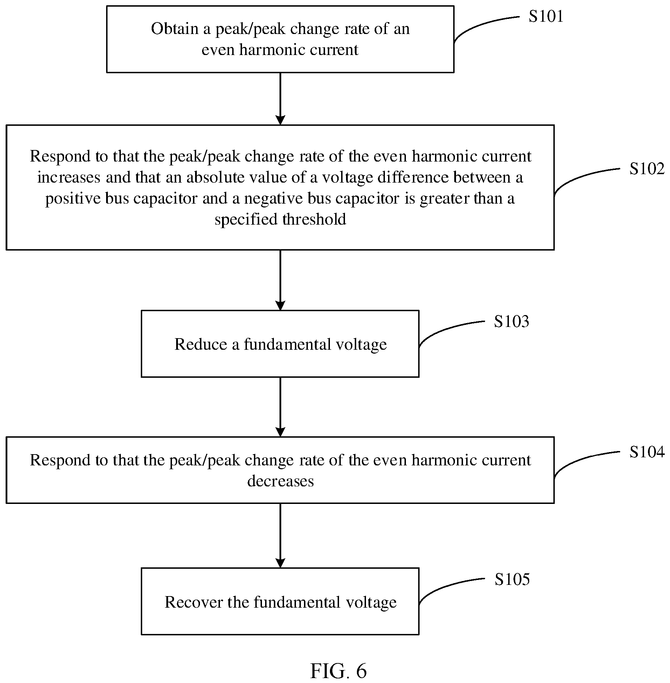

Proceed to refer to FIG. 6. As shown in FIG. 6, an embodiment of the foregoing method includes S101 to S105.

S101: Obtain a peak/peak change rate of an even harmonic current.

S102: Respond to that the peak/peak change rate of the even harmonic current increases and that an absolute value of a voltage difference between a positive bus capacitor and a negative bus capacitor is greater than a specified threshold.

S103: Reduce a fundamental voltage.

S104: Respond to that the peak/peak change rate of the even harmonic current decreases.

S105: Recover the fundamental voltage.

Specifically, when the peak/peak change rate of the even harmonic current increases and the absolute value of the voltage difference between the positive bus capacitor and the negative bus capacitor is greater than the specified threshold, it indicates that an excitation inrush current is large and a midpoint potential is clearly offset. On this basis, the fundamental voltage is reduced, so that the excitation inrush current can be effectively reduced, to mitigate impact of the excitation inrush current on a power converter and reduce an offset degree of the midpoint potential. Further, when the peak/peak change rate of the even harmonic current decreases, it indicates that the excitation inrush current also decreases gradually. On this basis, the fundamental voltage is gradually recovered, so that the fundamental voltage may be dynamically adjusted based on severity of the excitation inrush current, to ensure stability of power supply to a load. In this setting way, a magnitude of the fundamental voltage can be adjusted in real time based on the offset degree of the midpoint potential, to improve control precision.

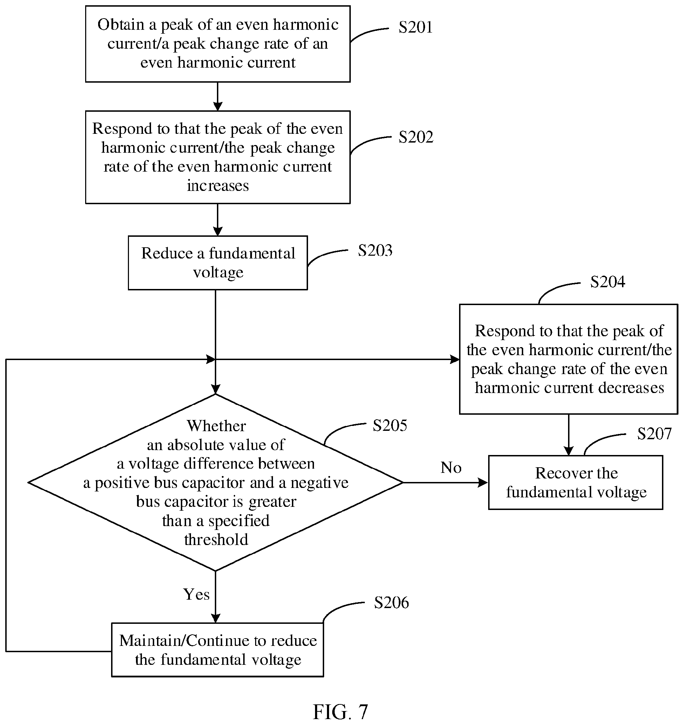

Proceed to refer to FIG. 7. As shown in FIG. 7, another embodiment of a resisting method in inductive load switching includes S201 to S207.

In a possible operating condition, this embodiment includes the following steps:

S201: Obtain a peak/peak change rate of an even harmonic current.
S202: Respond to that the peak/peak change rate of the even harmonic current increases.
S203: Reduce a fundamental voltage.
S204: Respond to that the peak/peak change rate of the even harmonic current decreases.
S207: Recover the fundamental voltage.

Specifically, when the peak/ peak change rate of the even harmonic current increases, it indicates that an excitation inrush current is large. On this basis, the fundamental voltage is reduced, so that the excitation inrush current can be effectively reduced, to mitigate impact of the excitation inrush current on a power converter. Further, when the peak/peak change rate of the even harmonic current decreases, it indicates that the excitation inrush current also decreases gradually. On this basis, the fundamental voltage is gradually recovered, so that the fundamental voltage may be dynamically adjusted based on severity of the excitation inrush current, to ensure stability of power supply to a load.

In another possible operating condition, this embodiment includes the following steps:

S201: Obtain a peak/peak change rate of an even harmonic current.
S202: Respond to that the peak/peak change rate of the even harmonic current increases.
S203: Reduce a fundamental voltage.
S205: Determine whether an absolute value of a voltage difference between a positive bus capacitor and a negative bus capacitor is greater than a specified threshold.
S206: If the absolute value of the voltage difference between the positive bus capacitor and the negative bus capacitor is not greater than the specified threshold, recover the fundamental voltage.
S207: If the absolute value of the voltage difference between the positive bus capacitor and the negative bus capacitor is greater than the specified threshold, maintain/continue to reduce the fundamental voltage, and re-enter S205.

Specifically, when the peak/ peak change rate of the even harmonic current increases, it indicates that an excitation inrush current is large. On this basis, the fundamental voltage is reduced first, so that the excitation inrush current can be reduced quickly, to mitigate impact of the excitation inrush current on a power converter. However, in some phases, even if the excitation inrush current is large, an offset degree of a midpoint potential of the power converter is small. Therefore, after the fundamental voltage is reduced, the offset degree of the midpoint potential is further determined, so that impact of the excitation inrush current can be better determined. In this way, when impact of the excitation inrush current on the midpoint potential is small, the fundamental voltage is quickly recovered, to ensure stability of power supply to a load. When impact of the excitation inrush current on the midpoint potential is large, the current fundamental voltage is maintained, or the fundamental voltage is continuously reduced, to adaptively mitigate impact of the excitation inrush current.

In conclusion, this application provides the power converter, the resisting method in inductive load switching, and the power generation system, so that switching of the inductive load at a full voltage can be implemented without adding the hardware device, to improve a capability of the power conversion device to resist current impact, maintain midpoint potential balance of the power conversion device, and improve reliability of power supply to the load.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made on the basis of the technical solutions of the present invention shall fall within the protection scope of the present invention.

## Claims

1. A power converter, wherein the power converter comprises a direct current input end, an alternating current output end, a bus capacitor, a DC/AC power conversion circuit, and a controller, wherein

   the direct current input end is configured to connect to a direct current source, the alternating current output end is configured to connect to a load, the bus capacitor comprises a positive bus capacitor and a negative bus capacitor that are connected in series, the positive bus capacitor is connected to a positive direct current bus, the negative bus capacitor is connected to a negative direct current bus, and the DC/AC power conversion circuit is connected in parallel between the positive direct current bus and the negative direct current bus, and configured to convert a direct current of the direct current source into an alternating current, and transmit the alternating current to the load through the alternating current output end; and
   the controller is configured to control, based on an even harmonic current on a connection line between the DC/AC power conversion circuit and the load, an output voltage at which the power converter outputs the alternating current, wherein a frequency of the even harmonic current is an even multiple of a grid frequency.

2. The power converter according to claim 1, wherein the controller is configured to: when the even harmonic current on the connection line between the DC/AC power conversion circuit and the load increases, reduce the output voltage.

3. The power converter according to claim 2, wherein the controller is configured to: when a peak of a second harmonic current on the connection line between the DC/AC power conversion circuit and the load increases, reduce the output voltage.

4. The power converter according to claim 2 or 3, wherein the controller is further configured to: in response to that a peak change rate of the second harmonic current on the connection line between the DC/AC power conversion circuit and the load increases, reduce the output voltage.

5. The power converter according to claim 3, wherein the controller is configured to: when an absolute value of a voltage difference between the positive bus capacitor and the negative bus capacitor is greater than a specified threshold and the peak of the second harmonic current on the connection line between the DC/AC power conversion circuit and the load increases, reduce the output voltage.

6. The power converter according to claim 4, wherein the controller is configured to: when an absolute value of a voltage difference between the positive bus capacitor and the negative bus capacitor is greater than a specified threshold and the peak change rate of the second harmonic current on the connection line between the DC/AC power conversion circuit and the load increases, reduce the output voltage.

7. The power converter according to claim 3 or 4, wherein after the output voltage at which the power converter outputs the alternating current decreases, the controller is further configured to: when an absolute value of a voltage difference between the positive bus capacitor and the negative bus capacitor decreases, boost the output voltage; or the controller is further configured to: when an absolute value of a voltage difference between the positive bus capacitor and the negative bus capacitor increases, reduce or maintain the output voltage.

8. A control method for an output voltage of a power converter, wherein the method comprises:

   controlling, based on an even harmonic current on a connection line between the power converter and a load, an output voltage at which the power converter outputs an alternating current, wherein the power converter is configured to convert a direct current from a photovoltaic module or an energy storage battery into the alternating current; and a frequency of the even harmonic current is an even multiple of a grid frequency.

9. The method according to claim 8, wherein the method comprises: when the even harmonic current increases, controlling the output voltage to decrease.

10. The method according to claim 9, wherein the method comprises: when a peak of a second harmonic current increases, controlling the output voltage to decrease.

11. The method according to claim 9 or 10, wherein the method comprises: when a peak change rate of the second harmonic current increases, controlling the output voltage to decrease.

12. The method according to claim 10, wherein the method comprises:

    when an absolute value of a voltage difference between a voltage of a positive bus capacitor and a voltage of a negative bus capacitor is greater than a specified threshold and the peak of the second harmonic current increases, controlling the output voltage to decrease, wherein the positive bus capacitor and the negative bus capacitor are connected in series between a positive direct current bus and a negative direct current bus of the power converter, the positive bus capacitor is connected to the positive direct current bus, and the negative bus capacitor is connected to the negative direct current bus.

13. The method according to claim 11, wherein the method comprises:

    when an absolute value of a voltage difference between a voltage of a positive bus capacitor and a voltage of a negative bus capacitor is greater than a specified threshold and the peak change rate of the second harmonic current increases, controlling the output voltage to decrease, wherein the positive bus capacitor and the negative bus capacitor are connected in series between a positive direct current bus and a negative direct current bus of the power converter, the positive bus capacitor is connected to the positive direct current bus, and the negative bus capacitor is connected to the negative direct current bus.

14. The method according to claim 10 or 11, wherein the method comprises:

    after the output voltage decreases, when an absolute value of a voltage difference between a voltage of a positive bus capacitor and a voltage of a negative bus capacitor decreases, controlling the output voltage to increase; or after the output voltage decreases, when an absolute value of a voltage difference between the positive bus capacitor and the negative bus capacitor increases, controlling the output voltage to decrease or remain unchanged, wherein the positive bus capacitor and the negative bus capacitor are connected in series between a positive direct current bus and a negative direct current bus of the power converter, the positive bus capacitor is connected to the positive direct current bus, and the negative bus capacitor is connected to the negative direct current bus.

15. A power generation system, wherein the power generation system comprises N power converters according to any one of claims 1 to 7 and an upper-level controller, direct current input ends of the N power converters are configured to connect to a direct current source, and alternating current output ends of the N power converters are connected in parallel and configured to connect to a load;

the upper-level controller is configured to: in response to midpoint potential offsets of at least two of the N power converters, control speeds at which fundamental voltages of the at least two power converters increase to be inversely proportional to a midpoint potential offset of a target power converter, with a largest midpoint potential offset, of the at least two target power converters; and

the midpoint potential offset is an absolute value of a voltage difference between a positive bus capacitor and a negative bus capacitor of each power converter, a series connection point of the positive bus capacitor and the negative bus capacitor is the midpoint, the positive bus capacitor is connected to a positive direct current bus, and the negative bus capacitor is connected to a negative direct current bus.

FIG. 1

(a)                                         (b)

FIG. 2

FIG. 3

FIG. 4

**Anti-excitation inrush current**

$I_{\text{inrush}}$ → 3/2 s/r → $\dfrac{k_3 s}{s^2 + 2\zeta_3\omega_3 s + \omega_3^2}$

$\dfrac{s^2 + \omega_6^2}{s^2 + 2\zeta_6\omega_6 s + \omega_6^2}$ ← $-3r/r$

RMS calc → $I_{\max}^{-2}$ → $\dfrac{k_2 s}{1 + Ts}$ → $\Delta U_{\text{ref}}^{+1}$

**Voltage recover**

$\Delta U_{dc1}$
$\Delta U_{dc2}$
$\Delta U_{dc3}$
⋮
$\Delta U_{dcn}$ → AVC → MAX → $\delta V_N$

$V_N$

**VSG frequency control**

Pref

$T_J$   $D_J$   $\omega_0$

$\omega_0$ → P-ω Primary Freq → Inertia & Damp → ω

ω

$k_p$

$P_e$

**P-ω droop control**     **Rotor swing equation**

**VSG voltage control**

Qref

$T_\varphi$   $D_\varphi$   $E_0$

V → Q-V Primary Volt → Excitation → $E_m$

$V_0$

$k_q$

$Q_e$

**Q-V droop control**     **Virtual excitation control**

FIG. 5

EP 4 542 838 A1

Obtain a peak/peak change rate of an
even harmonic current — S101

Respond to that the peak/peak change rate of the even harmonic current
increases and that an absolute value of a voltage difference between a
positive bus capacitor and a negative bus capacitor is greater than a
specified threshold — S102

Reduce a fundamental voltage — S103

Respond to that the peak/peak change rate of the even harmonic current
decreases — S104

Recover the fundamental voltage — S105

FIG. 6

Obtain a peak of an even harmonic
current/a peak change rate of an
even harmonic current — S201

Respond to that the peak of the even
harmonic current/the peak change
rate of the even harmonic current
increases — S202

Reduce a fundamental
voltage — S203

— S204

Respond to that the peak of
the even harmonic current/the
peak change rate of the even
harmonic current decreases

Whether
an absolute value of
a voltage difference between
a positive bus capacitor and a negative
bus capacitor is greater
than a specified
threshold — S205

No

Recover the
fundamental voltage — S207

Yes

Maintain/Continue to reduce
the fundamental voltage — S206

FIG. 7

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 544170 B2 (MEIDENSHA ELECTRIC MFG CO LTD) 17 July 2019 (2019-07-17) <br> * figures 1,2,6 * <br> * Machine translation; paragraph [0151] - paragraph [0156] * <br> - - - - - | 1-15 | INV. <br> H02M1/40 <br> H02M5/12 <br> H02M7/487 |
| X | CHEN HSIN-CHIH ET AL: "An inrush current mitigation method for the grid-connected converters in the low-voltage ride-through operation", <br> 2013 IEEE ENERGY CONVERSION CONGRESS AND EXPOSITION, IEEE, <br> 15 September 2013 (2013-09-15), pages 1717-1724, XP032516837, <br> DOI: 10.1109/ECCE.2013.6646914 <br> [retrieved on 2013-10-24] <br> * figures 1,7,9,10 * <br> - - - - - | 1-15 | |
| X | ALASSI ABDULRAHMAN ET AL: "Transformer Inrush Current Mitigation Techniques for Grid-Forming Inverters Dominated Grids", <br> IEEE TRANSACTIONS ON POWER DELIVERY, <br> vol. 38, no. 3, 1 June 2023 (2023-06-01), pages 1610-1620, XP093251344, <br> US <br> ISSN: 0885-8977, DOI: 10.1109/TPWRD.2022.3218923 <br> Retrieved from the Internet: <br> URL:https://ieeexplore.ieee.org/stampPDF/g etPDF.jsp?tp=&arnumber=9935287&ref=aHR0cHM 6Ly9pZWVleHBsb3JlLmll1ZWUub3JnL2Fic3RyYWN0 L2RvY3VtZW50Lzk5MzUyODc=> <br> * figures 7,8,9 * <br> * II B Soft Energization * <br> - - - - - <br> -/-- | 1-15 | TECHNICAL FIELDS SEARCHED (IPC) <br><br> H02M |

The present search report has been drawn up for all claims

| Place of search | Date of completion of the search | Examiner |
|---|---|---|
| The Hague | 17 February 2025 | Kail, Maximilian |

EPO FORM 1503 03.82 (P04C01)

Europäisches
Patentamt

European
Patent Office

Office européen
des brevets

# EUROPEAN SEARCH REPORT

Application Number

EP 24 20 7211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUHAG P PATEL: "Fundamentals of transformer inrush", PROTECTIVE RELAY ENGINEERS, 2011 64TH ANNUAL CONFERENCE FOR, IEEE, 11 April 2011 (2011-04-11), pages 290-300, XP031972571, DOI: 10.1109/CPRE.2011.6035630 ISBN: 978-1-4577-0494-9 * I. Introduction; page 139, left-hand column, last paragraph * | 1-15 | |
| A | JIA XU ET AL: "Influence of Inrush Current on Second Harmonic Characteristics of Direct-driven Wind Turbine", 2023 5TH ASIA ENERGY AND ELECTRICAL ENGINEERING SYMPOSIUM (AEEES), IEEE, 23 March 2023 (2023-03-23), pages 139-143, XP034339185, DOI: 10.1109/AEEES56888.2023.10114308 [retrieved on 2023-05-08] * "Method 2: 2nd Harmonic"; page 294, right-hand column * | 1-15 | **TECHNICAL FIELDS SEARCHED (IPC)** |

The present search report has been drawn up for all claims

| Place of search | Date of completion of the search | Examiner |
|---|---|---|
| The Hague | 17 February 2025 | Kail, Maximilian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 24 20 7211

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2025

| Patent document cited in search report | | Publication date | Patent family member(s) | | Publication date |
|---|---|---|---|---|---|
| JP 6544170 | B2 | 17-07-2019 | JP | 6544170 B2 | 17-07-2019 |
| | | | JP | 2017060272 A | 23-03-2017 |

EPO FORM P0459

For more details about this annex : see Official Journal of the European Patent Office, No. 12/82